# EUROPÄISCHE PATENTSCHRIFT

(11) **EP 2 534 393 B1**
(45) Veröffentlichungstag und Bekanntmachung des Hinweises auf die Patenterteilung: **29.08.2018**
(21) Anmeldenummer: 11702183.2
(22) Anmeldetag: 02.02.2011
(51) Int. Cl.: F16H 1/16, H02K 7/116

(54) **ANTRIEBSVORRICHTUNG**
DRIVE DEVICE
DISPOSITIF D'ENTRAÎNEMENT

(30) Priorität: 12.02.2010 DE 102010007785
(43) Veröffentlichungstag der Anmeldung: 19.12.2012
(73) Patentinhaber: Mahle International GmbH, 70376 Stuttgart (DE)
(72) Erfinder: WEBER, Thomas, 73650 Winterbach (DE)
(74) Vertreter: BRP Renaud & Partner mbB Rechtsanwälte Patentanwälte Steuerberater
(86) Internationale Anmeldenummer: PCT/EP2011/051434
(87) Internationale Veröffentlichungsnummer: WO 2011/098378

(56) Entgegenhaltungen:
- EP-A1- 0 672 812
- WO-A1-2008/061956
- DE-A1- 2 133 237
- DE-A1-102004 044 862
- DE-A1-102006 036 523
- DE-A1-102007 026 257
- DE-U1- 20 200 928
- DE-U1-202006 019 194
- GB-A- 2 040 389
- JP-A- 60 190 139
- US-A- 4 227 104

## Beschreibung

Die vorliegende Erfindung betrifft eine Antriebsvorrichtung, insbesondere für Fahrzeuganwendungen, wie z. B. zum Antreiben wenigstens eines Stellglieds einer Drossel oder einer Klappe oder eines Ventils, mit den Merkmalen des Oberbegriff des Anspruchs 1.

Aus der WO 2008/061956 A1 ist eine Antriebsvorrichtung bekannt. Sie umfasst einen Antriebsmotor, der eine Antriebswelle rotierend antreibt, eine Schnecke, die mit der Antriebswelle antriebsgekoppelt ist, sowie ein Schneckenrad, das mit der Schnecke in Eingriff steht und mit einer Abtriebswelle antriebgekoppelt ist.

Aus der GB 2 040 389 A ist eine gattungsgemäße Antriebsvorrichtung bekannt, die sich von der vorstehenden dadurch auszeichnet, dass ein Axiallager für das Schneckenrad vorgesehen ist, das die von der Schnecke auf das Schneckenrad übertragenen Axialkräfte aufnimmt. Dabei ist das Axiallager konzentrisch zur Drehachse des Schneckenrads angeordnet und erstreckt sich in der Umfangsrichtung geschlossen. Eine weitere Antriebsvorrichtung, die ein konzentrisch angeordnetes und ringförmig geschlossen umlaufendes Axiallager aufweist, ist aus der DE 202 00 928 U1 bekannt.

Die vorliegende Erfindung beschäftigt sich mit dem Problem, für eine Antriebsvorrichtung der Eingangs genannten Art eine verbesserte oder zumindest eine andere Ausführungsform anzugeben, die sich insbesondere durch einen vereinfachten Aufbau und/oder reduzierte Herstellungskosten und insbesondere durch einen reduzierten Verschleiß auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Lagerkräfte der Schnecke bzw. des Schneckenrads direkt in das Gehäuse der Antriebsvorrichtung einzuleiten. Hierzu verfügt das Gehäuse über entsprechende Lager.

Gemäß einer besonders vorteilhaften Ausführungsform der Antriebsvorrichtung können alle auftretenden Kräfte bzw. Lagerkräfte in einer ersten Gehäuseschale aufgenommen sein. Weiterhin kann die erste Gehäuseschale über sämtliche Aufnahmen für die Antriebsteile der Antriebsvorrichtung verfügen. Diese erste Gehäuseschale ist mit einer zweiten Gehäuseschale verbunden, wobei die zweite Gehäuseschale lediglich eine Deckelfunktion aufweist und über keinerlei Lagerstellen oder Aufnahmen verfügt.

Die an einem Schneckenrad auftretenden Kräfte sind in Axial- und Radialkräfte zerlegbar. Zur Lagerung des Schneckenrades verfügt das Gehäuse über ein Axiallager, das die von der Schnecke auf das Schneckenrad übertragenen Axialkräfte aufnimmt.

Bei einer vorteilhaften Ausführungsform kann das Axiallager zwei, sich gegenüberliegende Absätze aufweisen, an denen das Schneckenrad axial beiderseits abgestützt ist.

Erfindungsgemäß ist das Axiallager bezüglich der Drehachse des Schneckenrads exzentrisch und im Eingriffsbereich zwischen Schnecke und Schneckenrad angeordnet sein.

Insbesondere kann bei einer Ausführungsform vorgesehen sein, dass das Axiallager an einer die Schnecke in der Umfangsrichtung umgreifenden und zum Schneckenrad hin offenen Hülse ausgebildet ist, insbesondere integral daran ausgeformt ist. Diese Hülse kann bevorzugt integral am Gehäuse, insbesondere an der ersten Gehäuseschale, ausgeformt sein. Generell kann vorgesehen sein, dass das Axiallager integral am Gehäuse, vorzugsweise in Urformtechnik, insbesondere mittels eines einzigen Schiebers, hergestellt ist.

Bei einer bevorzugten Ausführung der Erfindung kann somit das Axiallager zwei sich gegenüberliegende Absätze aufweisen, zwischen welchen sich der Zahnkranz des Schneckenrades dreht. Hierbei ist es vorteilhaft, wenn der Zahnkranz des Schneckenrades in axialer Richtung über die angrenzenden Bereiche des Schneckenrades übersteht. Somit ist eine definierte Kontaktfläche und somit Reibfläche zwischen dem Schneckenrad und den Axiallagerstellen realisierbar. Da es sich um ein Schneckenrad handelt, ist die Rotationsgeschwindigkeit relativ gering, wodurch kein übermäßiger Verschleiß entsteht. Vorteilhafte Materialpaarungen können z.B. durch zwei gleichartige, gefüllte oder ungefüllte Kunststoffe wie z.B. Polyamid, Polypropylen oder Polyethylen gebildet werden. Diese Kunststoffe lassen sich z.B. durch ein Spritzgussverfahren leicht verarbeiten. Es sind aber auch Materialpaarungen wie z.B. Metall-Metall oder Metall-Kunststoff realisierbar, wenngleich hier höhere Materialkosten und aufwendigere Herstellverfahren notwendig sind.

Gemäß einem bevorzugten Ausführungsbeispiel ist das Gehäuse als Kunststoffspritzgussteil ausgeführt. Das Axiallager ist, bzw. die sich gegenüberliegenden Absätze an welchen sich beide Stirnseiten des Zahnkranzes des Schneckenrades abstützen, sind mit einem Schieber entformbar. Hierzu ist an dem Gehäuse eine Motoraufnahme vorgesehen, durch welche der Schieber für die Bildung des Axiallagers entfernbar ist. Dies ist besonders vorteilhaft, da ein Schieber beide Geometrien des Axiallagers definiert und somit lediglich die Toleranzen dieses Schiebers für die Toleranzen des Axiallagers bedingt. Somit lassen sich engere Toleranzen für das Axiallager realisieren. Dies hat wiederum positiven Einfluss auf den Verschleiß zwischen Schneckenrad und Schneckenrad-Axiallager.

Die an der Schnecke auftretenden Lagerkräfte sind ebenfalls in Axial- und Radialkräfte zerlegbar. Zur Aufnahme der Axialkräfte ist ein Schneckenlager vorgesehen, welches über ein Schneckenaxiallager verfügt. Die Kopplung zwischen Antriebswelle des Motors und Schnecke erfolgt zweckmäßig so, dass die Antriebswelle von den auftretenden Lagerkräften entkoppelt ist. Zu diesem Zweck kann das Schneckenlager vorzugsweise spielfrei, insbesondere durch Kraftschluss, mit dem Antriebsmotor verbunden sein. Das Schneckenlager kann als gesondertes Bauteil ausgeführt und auf den Antriebsmotor aufgepresst sein. Somit sind in axialer Richtung der Schnecke keine Relativbewegungen möglich. Durch das vom Gehäuse gesondert ausgeführte Schneckenlager kann die Gehäusestruktur einfacher ausgestaltet sein, wodurch die Herstellung der Gehäusestruktur vereinfacht ist. Weiterhin kann das Schneckenlager in einem anderen Werkstoff, insbesondere einem besonderen Lagerwerkstoff, ausgeführt sein. Bei einer anderen Ausführung ist das Schneckenlager in das Gehäuse kraftschlüssig eingepresst und der Antriebsmotor in das Schneckenlager eingesteckt. Hierbei ist der Antriebsmotor durch das Schneckenlager geführt. Bei einer weiteren alternativen Ausführungsform kann das Schneckenlager sowohl mit dem Antriebsmotor, als auch mit dem Gehäuse kraftschlüssig verbunden sein. Die Radialkräfte der Schnecke werden am Schneckenende in einem als Bohrung ausgeführtem Radiallager in dem Gehäuse, oder in einer in dem Gehäuse angeordneten gesonderten Lagerbuchse aufgenommen. In axialer Richtung kann dieses Radiallager keine Kräfte aufnehmen.

Bei einer Weiterbildung der Erfindung verfügt das Schneckenlager zusätzlich über ein Schneckenradiallager. Dieses Schneckenradiallager ist c-förmig ausgebildet und umschließt die Schnecke im Lagerbereich vorzugsweise zu mehr als 180°. Die Schnecke ist radial zur Antriebswellendrehachse in das Schneckenlager einsetzbar. Bei einer Umschließung von mehr als 180° wird die Schnecke in das Schneckenlager eingeklipst, wobei das Schneckenlager aus einem Material besteht, welches eine derartige elastische Verformung zulässt. Besonders vorteilhaft ist hierbei ein thermoplastischer, gefüllter oder ungefüllter Kunststoff, wie z.B. Polyamid, Polyethylen oder Polypropylen.

Zur verbesserten Fixierung des Schneckenlagers im Gehäuse ist es vorteilhaft, wenn das Schneckenlager zwischen dem Antriebsmotor und dem Gehäuse verspannt wird. Dies kann z.B. durch eine Kappe bzw. ein Schraubdeckel erfolgen, welcher den Antriebsmotor in dem Gehäuse fixiert und so die axiale Anlagekraft des Antriebsmotors in dem Gehäuse erzeugt.

Gemäß einer alternativen Ausgestaltung der Erfindung ist das Schneckenlager als integraler Bestandteil des Gehäuses ausgeführt. Bei der Montage des Antriebsmotors wird dieser spielfrei auf das Schneckenlager aufgepresst und durch die Kappe oder einen Schraubdeckel in dieser Position gehalten.

Bei einer besonderen Ausführungsform weist das Gehäuse eine Bohrung auf, mit welcher eine radiale Zentrierung des Abtriebs realisiert wird. Hierbei kann das Gehäuse selbst als Radiallager für den Abtrieb ausgestaltet sein. Bei anderen Ausgestaltungen können gesonderte Radiallager zwischen Abtrieb und Gehäuse eingesetzt werden, um die radiale Lagerung des Abtriebs zu realisieren. Gemäß einer Weiterbildung ist das Schneckenrad derart mit dem im Gehäuse zentrierten Abtrieb gekoppelt, dass Geometrien des Schneckenrades formschlüssig in Geometrien des Abtriebs eingreifen. Somit wird über die Zentrierung des Abtriebs eine Zentrierung und somit Radiallagerung des Schneckenrades realisiert. Durch die Zentrierung des Schneckenrads zum Abtrieb ergibt sich eine definierte Relativlage, wodurch das Zusammenwirken von Schnecke und Schneckenrad verbessert werden kann. Insbesondere lässt sich dieses Schneckengetriebe dadurch hinsichtlich Verschleiß optimieren.

Gemäß einer anderen vorteilhaften Ausführungsform, die auch eine alternative, selbständige Lösung repräsentiert, kann die Antriebskopplung zwischen Schneckenrad und Abtrieb mittels einer Clipsverbindung realisiert werden, die am Schneckenrad angeordnete erste Clipselemente und an dem Abtrieb angeordnete zweite Clipselemente aufweist, wobei diese Clipselemente das Schneckenrad axial fest mit dem Abtrieb verbinden. Die Realisierung der Antriebskopplung mittels einer solchen Clipsverbindung vereinfacht die Montage der Antriebsvorrichtung. Gleichzeitig werden dadurch die Herstellungskosten gesenkt.

Zweckmäßig können die Clipselemente integral am Schneckenrad bzw. an dem Abtrieb ausgeformt sein, wodurch sich eine weitere Vereinfachung zur Reduzierung der Herstellungskosten ergibt.

Die einen Clipselemente können durch radial federnde Rasten gebildet sein, während die anderen Clipselemente durch radiale Rastvertiefungen gebildet sind, in welche die Rasten eingreifen und das Schneckenrad in Axialrichtung formschlüssig an dem Abtrieb sichern. Diese radial federnden Rasten können in den Rastvertiefungen unter radialer Vorspannung zur Anlage kommen, wodurch eine zentrierende Federkraft realisiert werden kann.

Entsprechend einer weiteren vorteilhaften Ausführungsform kann die Schnecke bzgl. einer Antriebswellendrehachse lose auf die Antriebswelle aufgesteckt sein und an einem Schneckenlager bzgl. der Antriebswellendrehachse radial gelagert sein. Auch diese Maßnahme führt zu einer vereinfachten Montierbarkeit der Antriebsvorrichtung.

Bei einer vorteilhaften Ausgestaltung der Erfindung ist eine Positions-/ Bewegungserkennung für den Abtrieb vorgesehen. Somit kann der Zustand, in welchem sich der Abtrieb befindet detektiert werden. Diese Erkennung ist durch eine Platine und einen Magneten realisiert, wobei der Magnet drehfest mit dem Abtrieb korrespondiert. Hierzu kann der Magnet mit dem Schneckenrad oder direkt mit dem Abtrieb verbunden sein. Vorzugsweise ist der Magnet in einer Aufnahme des Abtriebes angeordnet.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische, auseinandergezogene Darstellung der Antriebsvorrichtung,
- Fig. 2: eine perspektivische Ansicht der Antriebsvorrichtung bei fehlendem Schneckenrad,
- Fig. 3: eine perspektivische Ansicht der Antriebsvorrichtung im Bereich des Schneckenrads mit einer Schnecke,
- Fig. 4: eine Seitenansicht der Schnecke,
- Fig. 5: eine Schnittansicht im Bereich des Schneckenrads,
- Fig. 6: ein vergrößertes Detail aus Fig. 5,
- Fig. 7: eine Schnittansicht im Bereich der Schnecke.

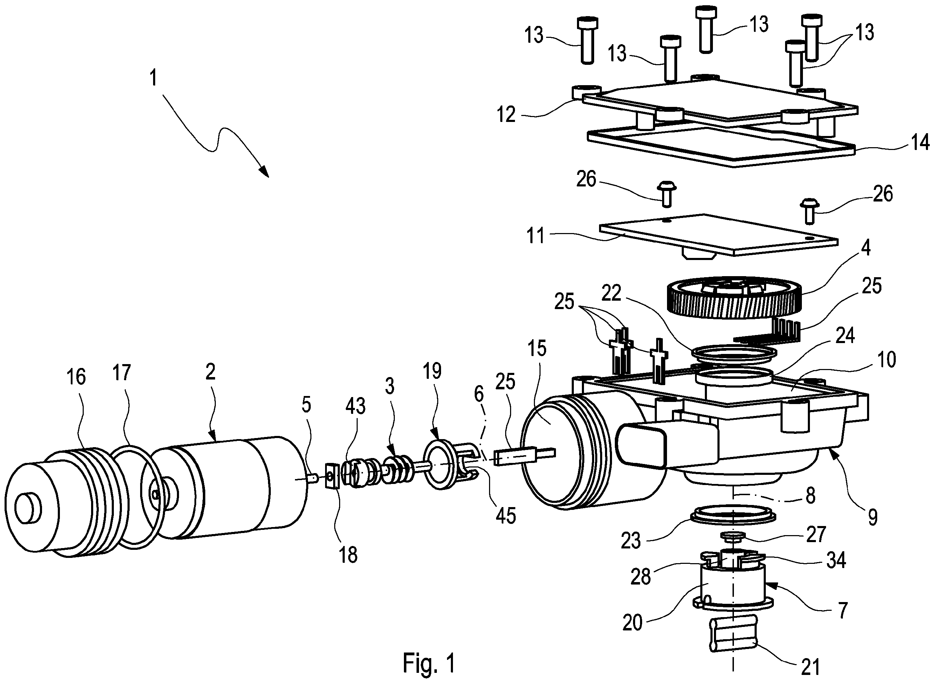

Entsprechend den Figuren 1 bis 7 umfasst eine Antriebsvorrichtung 1 einen Antriebsmotor 2, eine Schnecke 3 und ein Schneckenrad 4. Die Antriebsvorrichtung 1 ist in besonderer Weise für Fahrzeuganwendungen geeignet. Bspw. kann sie zum Antreiben wenigstens eines - hier nicht dargestellten - Stellglieds einer Drossel oder Klappe oder eines Ventils dienen. Insoweit kann es sich bei der Antriebsvorrichtung 1 bspw. um einen Drosselantrieb oder um einen Klappenantrieb oder um einen Ventilantrieb handeln.

Der Antriebsmotor 2 ist vorzugsweise ein Elektromotor und treibt eine Antriebswelle 5, welche auch als Motorwelle bezeichnet werden kann, rotierend an, wobei die Antriebswelle 5 dabei um eine Antriebswellendrehachse 6 rotiert. Die Schnecke 3 ist mit der Antriebswelle 5 antriebsgekoppelt. Die Antriebskopplung erfolgt dabei so, dass die Schnecke 3 ebenfalls um die Antriebswellendrehachse 6 rotiert. Das Schneckenrad 4 steht mit der Schnecke 3 in Eingriff und ist mit einem Abtrieb 7 antriebsgekoppelt. Der Abtrieb 7 rotiert dabei um eine Abtriebsdrehachse 8. Die Antriebskopplung erfolgt so, dass auch das Schneckenrad 4 um die Abtriebsdrehachse 8 rotiert. Die Abtriebsdrehachse 8 verläuft senkrecht zur Antriebswellendrehachse 6.

Im zusammengebauten Zustand ist das Schneckenrad 4, bezogen auf die Abtriebsdrehachse 8, zum Abtrieb 7 radial zentriert. Diese radiale Zentrierung wird durch eine Formschlussverbindung zwischen dem Schneckenrad 4 und dem Abtrieb 7 realisiert. Dies kann vorzugsweise so realisiert werden, dass Konturen von dem Schneckenrad 4 in Konturen des Abtriebs 7 eingreifen. Insbesondere kann vorgesehen sein, dass die Antriebskopplung zwischen Schneckenrad 4 und Abtriebs 7 die genannte Zentrierung des Schneckenrads 4 an dem Abtrieb 7 erzeugt.

Die Antriebsvorrichtung 1 weist, insbesondere gemäß Fig. 1, ein Gehäuse 9 auf, das einen in Fig. 1 nach oben offenen Aufnahmeraum 10 enthält, in dem das Schneckenrad 4 angeordnet ist. Ferner dient der Aufnahmeraum 10 zur Aufnahme einer Platine 11, die bspw. eine gedruckte Schaltung aufweisen kann. Der Aufnahmeraum 10 ist mit einem Deckel 12 verschließbar, der hierzu auf geeignete Weise am Gehäuse 9 befestigt, insbesondere verklipst, verklebt, verschweißt oder verschraubt werden kann. Im Beispiel sind fünf Schrauben 13 dargestellt, die es ermöglichen, den Deckel 12 am Gehäuse 9 zu befestigen. Dabei kann eine Dichtung 14 zwischen Deckel 12 und Gehäuse 9 angeordnet sein.

Das Gehäuse 9 weist außerdem eine Motoraufnahme 15 auf, die seitlich an den Aufnahmeraum 10 anschließt. In diese Motoraufnahme 15 ist der Antriebsmotor 2 eingesteckt. Dabei ragt zumindest die Schnecke 3 bis in den Aufnahmeraum 10 hinein, um dort das Schneckenrad 4 zu kämmen. Die Motoraufnahme 15 ist mit einer Kappe 16 verschließbar, die insbesondere auf die Motoraufnahme 15 aufschraubbar ist und so eine definierte Anpresskraft auf den Antriebsmotor 2 in der Motoraufnahme 15 ausüben kann. Auch hier kann eine Dichtung 17 vorgesehen sein, die bei aufgeschraubter Kappe 16 zwischen der Kappe 16 und dem Gehäuse 9 angeordnet ist.

Die Antriebskopplung zwischen Antriebswelle 5 und Schnecke 3 kann bspw. mit Hilfe eines Mitnehmers 18 realisiert werden, der drehfest mit der Antriebswelle 5 gekoppelt ist und der formschlüssig mit der Schnecke 3 zusammenwirkt. Die Lagerung der Schnecke 3 kann zumindest teilweise mit einem Schneckenlager 19 realisiert werden, das hierzu kraftschlüssig mit dem Antriebsmotor 2 verbunden ist.

Der Abtrieb 7 umfasst zweckmäßig ein Abtriebsglied 20, das einerseits mit dem Schneckenrad 4 antriebsgekoppelt ist und andererseits über einen weiteren Mitnehmer 21 mit dem anzutreibenden Stellglied, z.B. einem Ventil oder einer Klappe, gekoppelt ist. Das Abtriebsglied 20 ist mit Hilfe von zwei Radiallagern 22 und 23 am Gehäuse 9 gelagert. Zusätzlich kann eine Dichtung 24, welche insbesondere als X-Dichtung ausgeführt ist, vorgesehen sein, um das Abtriebsglied 20 gegenüber dem Gehäuse 9 abzudichten.

Ferner sind in Fig. 1 noch elektrische Kontakte 25 angedeutet, die ebenfalls an geeigneter Stelle in das Gehäuse 9 eingebaut werden, um die Platine 11 zu kontaktieren. Weitere Schrauben 26 dienen zur Fixierung der Platine 11 im Gehäuse 9. Ferner ist in Fig. 1 noch ein Magnet 27 erkennbar, der in einer hohlzylindrischen Magnetaufnahme 28 des Abtriebsglieds 20 angeordnet ist. Durch den Magneten 27 ist es mittels der Platine 11 möglich, die exakte Position des Abtriebs 7 bzw. dessen Bewegung zu detektieren. Somit kann eine genaue Steuerung des Stellgliedes erfolgen.

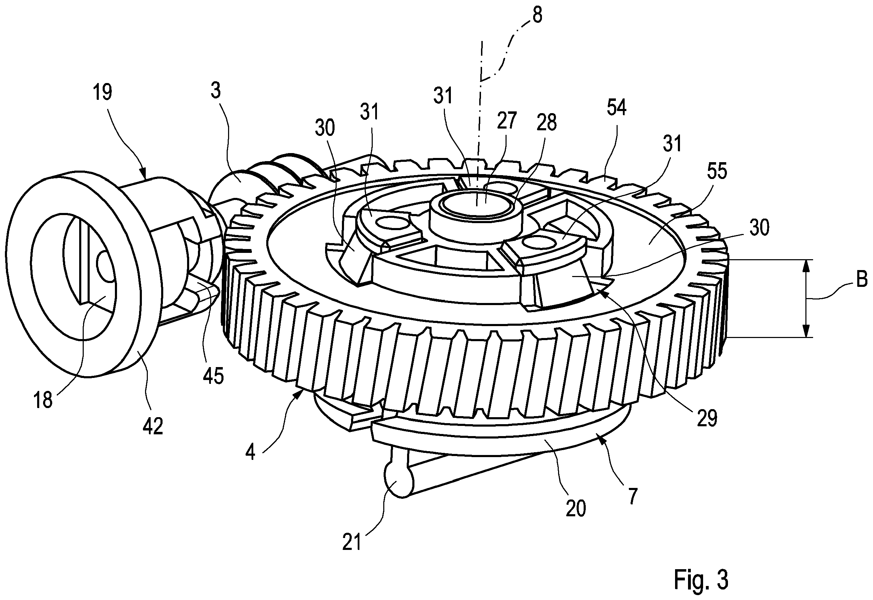

Entsprechend den Figuren 3, 5 und 6 erfolgt die Antriebskopplung zwischen Schneckenrad 4 und Abtrieb 7 mit Hilfe einer Clipsverbindung 29. Diese Clipsverbindung 29 weist am Schneckenrad 4 ausgebildete erste Clipselemente 30 auf und besitzt an dem Abtrieb 7 angeordnete zweite Clipselemente 31. Die Clipselemente 30,31 bzw. die Clipsverbindung verbinden das Schneckenrad 4 bzgl. der Abtriebsdrehachse 8 axialfest mit dem Abtrieb 7. Im Beispiel sind drei erste Clipselemente 30 und drei zweite Clipselemente 31 vorgesehen, die jeweils exzentrisch zur Abtriebsdrehachse 8 positioniert sind und dazu im Wesentlichen sternförmig verteilt angeordnet sind. Zweckmäßig können die ersten Clipselemente 30 integral am Schneckenrad 4 ausgeformt sein. Insbesondere kann das Schneckenrad 4 besonders preiswert als Kunststoffspritzteil hergestellt sein. Die zweiten Clipselemente 31 können zweckmäßig integral an dem Abtrieb 7 ausgeformt sein. Im Beispiel sind die zweiten Clipselemente 31 integral am Abtriebsglied 20 ausgeformt. Besagtes Abtriebsglied 20 kann zweckmäßig als Spritzgussformteil aus Kunststoff hergestellt sein.

Die einen Clipselemente, hier die ersten Clipselemente 30, sind im gezeigten Beispiel durch radial federnde Rasten gebildet, die im Folgenden auch als Rasten 30 bezeichnet werden. Die anderen Clipselemente, also hier die zweiten Clipselemente 31, sind bei der hier gezeigten Ausführungsform durch radiale Rastvertiefungen gebildet, die im Folgenden auch als Rastvertiefungen 31 bezeichnet werden. Die Rasten 30 greifen im verclipsten bzw. verrasteten Zustand in die Rastvertiefungen 31 radial ein, wodurch sich in der Axialrichtung eine formschlüssige Sicherung zwischen Schneckenrad 4 und Abtrieb 7 bzw. Abtriebsglied 20 ergibt.

Die Rasten 30 wirken dabei radial von außen nach innen, wodurch sie mittels Federkraft eine Zentrierung zwischen Schneckenrad 4 und Abtrieb 7 bzw. Abtriebsglied 20 ermöglichen.

Die Clipsverbindung 29 ist außerdem mit wenigstens einem Mitnehmer 34 ausgestattet, der mit einer dazu komplementären Mitnehmeröffnung 35 zusammenwirkt. Im gezeigten Beispiel befindet sich der jeweilige Mitnehmer 34 an dem Abtrieb 7 bzw. am Abtriebsglied 20, wobei auch hier eine Ausführungsform bevorzugt wird, bei welcher der jeweilige Mitnehmer 34 integral an der Abtriebswelle 7 bzw. am Abtriebsglied 20 ausgeformt ist. Die jeweilige Mitnehmeröffnung 35 ist im Beispiel am Schneckenrad 4 ausgebildet bzw. integral ausgeformt.

Der jeweilige Mitnehmer 34 ist bzgl. der Abtriebsdrehachse 8 exzentrisch angeordnet und erstreckt sich parallel zur Abtriebsdrehachse 8. Die jeweilige Mitnehmeröffnung 35 ist dazu komplementär geformt und positioniert. In der Folge kann der jeweilige Mitnehmer 34 axial in die zugehörige Mitnehmeröffnung 35 hineinragen. Hierdurch lässt sich eine formschlüssige Sicherung des Schneckenrads 4 an dem Abtrieb 7 bzw. am Abtriebsglied 20 in der Drehrichtung realisieren. Im Beispiel sind drei Mitnehmer 34 vorgesehen, die bzgl. der Abtriebsdrehachse 8 sternförmig angeordnet sind und so eine radiale Fixierung und Zentrierung zwischen dem Abtrieb 7 und dem Schneckenrad 4 erzeugen. Bei anderen Ausführungen kann auch nur ein einziger Mitnehmer 34 vorgesehen sein oder bei mehreren Mitnehmern 34 eine beliebige andere Anordnung als die Sternform vorgesehen werden.

Besonders vorteilhaft ist die hier gezeigte Ausführungsform, bei welcher die zweiten Clipselemente 31 an den Mitnehmern 34 ausgeformt sind und bei der die ersten Clipselemente 30 im Bereich der Mitnehmeröffnungen 35 angeordnet sind. Bei anderen Ausführungen können die Mitnehmer 34 bzw. Mitnehmeröffnungen 35 auch beabstandet zu den Clipselementen 30, 31 angeordnet werden.

Der Abtrieb 7 besitzt an seinem Abtriebsglied 20 die Magnetaufnahme 28, die koaxial zur Abtriebsdrehachse 8 angeordnet ist. Die Magnetaufnahme 28 ist oberhalb einer Materialaussparung 33 angeordnet, welche eine Materialanhäufung und die damit verbundenen Probleme, wie z.B. Verzug durch ungleichmäßige Materialabkühlung bei der Herstellung, verhindert. Weiterhin durchsetzt die Magnetaufnahme 28 eine Zentralöffnung 36, die im Schneckenrad 4 konzentrisch zur Abtriebsdrehachse 8 ausgebildet ist, so dass die Platine 11 das Magnetfeld des Magneten 27 erfassen kann.

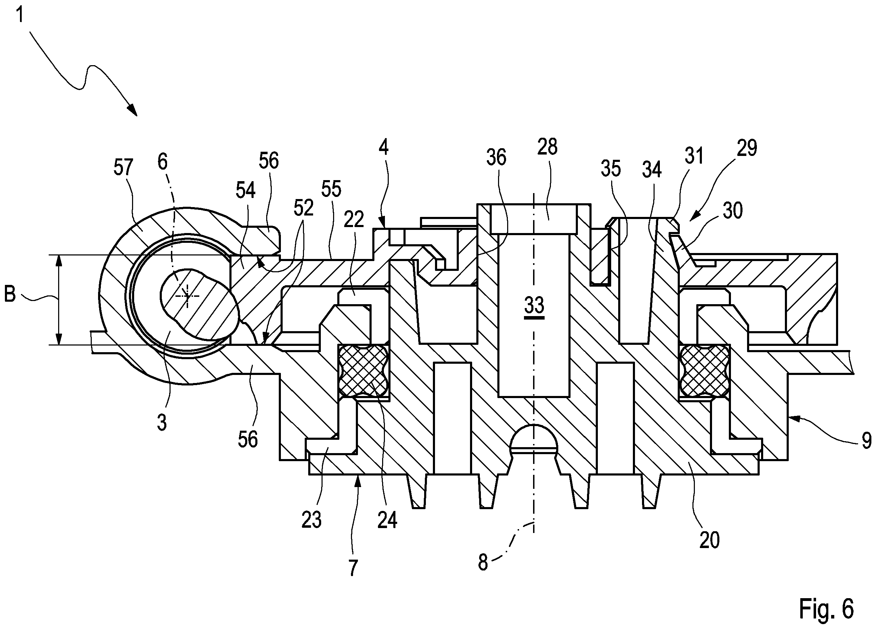

Der Abtrieb 7 bzw. das Abtriebsglied 20 ist über die beiden Radiallager 22,23 bzgl. der Abtriebsdrehachse 8 radial am Gehäuse 9 abgestützt und drehbar gelagert. Axial zwischen den beiden Radiallagern 22,23 befindet sich die als Wellendichtring ausgestaltete Dichtung 24. Die beiden Radiallager 22,23 definieren an dem Abtrieb 7 bzw. an dem Abtriebsglied 20 über eine axiale Länge einen radialen Lagerbereich. Bemerkenswert ist, dass die Antriebswellendrehachse 6 gemäß Fig. 6 in einer Ebene liegt, die in diesen Lagerabschnitt fällt. Sofern die Schnecke 3 bzgl. der Abtriebsdrehachse 8 radiale Kräfte auf das Schneckenrad 4 überträgt, werden diese im Wesentlichen direkt radial am Gehäuse 9 abgestützt, ohne dass Kippmomente innerhalb der Lagerung des Schneckenrades 4 bzw. des Abtriebs 7 bzw. des Abtriebsglieds 20 entstehen.

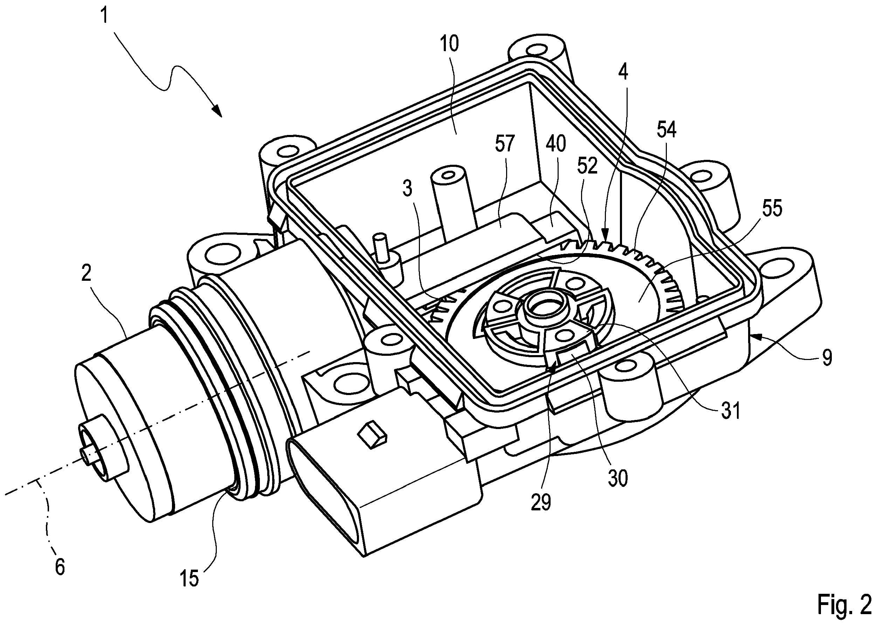

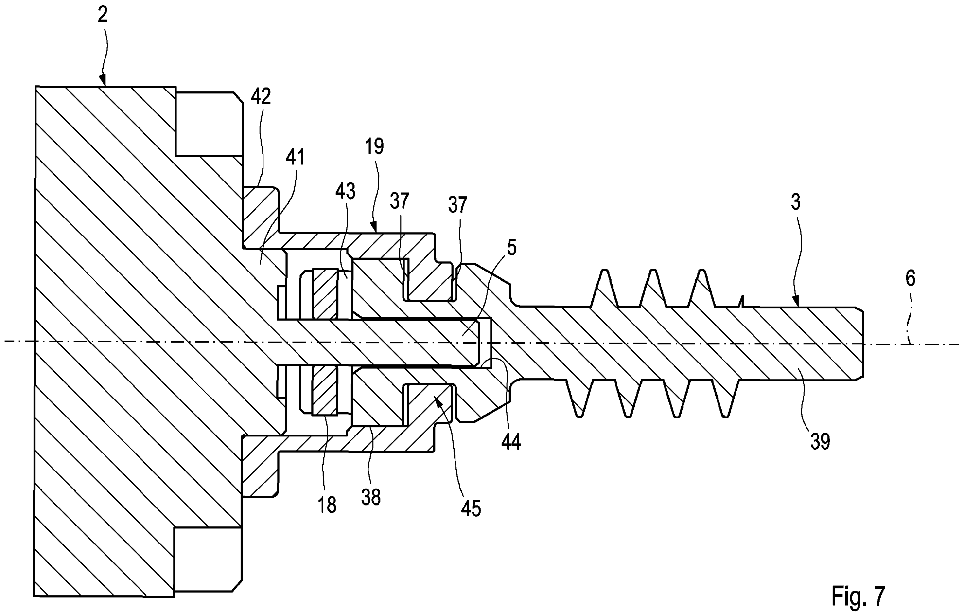

Entsprechend den Figuren 2 bis 4 und 7, kann die Schnecke 3 entsprechend der hier gezeigten, bevorzugten Ausführungsform bzgl. der Antriebswellendrehachse 6 lose auf die Antriebswelle 5 aufgesteckt sein. Zur Lagerung bzw. zum Festhalten der Schnecke 3 ist das Schneckenlager 19 vorgesehen. An diesem Schneckenlager 19 erfolgt bzgl. der Antriebswellendrehachse 6 eine radiale Lagerung der Schnecke 3, vorzugsweise in einem Bereich von mehr als 180° des Schneckenumfangs. Hierzu verfügt das Schneckenlager 19 über ein c-förmiges Schneckenradiallager 45, in welches die Schnecke 3 eingeklipst wird. Hierbei ist die Öffnung der c-Form in Richtung des Schneckenrades 4 gerichtet, da in dieser Richtung keine Kräfte aufgenommen werden müssen. Außerdem erfolgt an diesem Schneckenlager 19 bezogen auf die Antriebswellendrehachse 6 eine axiale Lagerung der Schnecke 3. In Fig. 7 sind zwei axiale Lagerstellen 37 erkennbar. Innerhalb des Schneckenlagers 19 erfolgt bei 38 die radiale Abstützung bzw. im Schneckenradiallager 45 die radiale Lagerung der Schnecke 3 am Schneckenlager 19. Zwischen den beiden axialen Lagerstellen 37 kann ein Radialspiel zwischen dem Schneckenlager 19 und der Schnecke 3 vorliegen.

Distal zum Schneckenlager 19 kann die Schnecke 3 mit ihrem Schneckenende 39 an einem gehäuseseitigen Lager 40, welches durch eine gesonderte Lagerbuchse oder direkt durch das Gehäuse 9 gebildet sein kann, radial gelagert sein, das in Fig. 2 erkennbar ist. Die axiale Lagerung der Schnecke 3 kann zweckmäßig ausschließlich am Schneckenlager 19 erfolgen.

Besagtes Schneckenlager 19 kann bzgl. des Gehäuses 9 ein separates Bauteil sein. Das Schneckenlager 19 ist am Antriebsmotor 2 festgelegt. Im Beispiel ist das Schneckenlager 19 am Antriebsmotor 2 ausschließlich durch Kraftschluss festgelegt. Hierzu ist das Schneckenlager 19 auf eine Ringstufe 41, die koaxial zur Antriebswelle 5 am Antriebsmotor 2 ausgebildet ist, mit einem Presssitz aufgesteckt. Zur Aussteifung des Schneckenlagers 19 im Bereich dieses Presssitzes kann das Schneckenlager 19 mit einem ringförmig umlaufenden Bund 42 versehen sein.

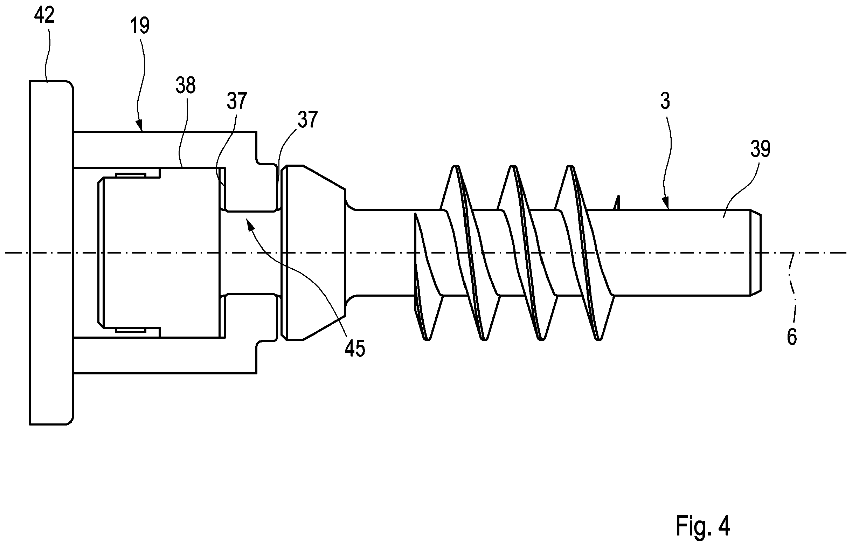

Wie den Figuren 3 und 4 zu entnehmen ist, kann das Schneckenlager 19 bzgl. der Antriebswellendrehachse 6 radial an einer Seite offen ausgestaltet sein, und zwar derart, dass die Schnecke 3 radial zur Antriebswellendrehachse 6, also seitlich in das Schneckenlager 19 einsetzbar ist. Hierdurch ist es möglich, die Schnecke 3 vor dem Anbringen des Schneckenlagers 19 am Antriebsmotor 2 in das Schneckenlager 19 einzusetzen. Anschließend kann dann die aus der Schnecke 3 und dem Schneckenlager 19 gebildete Montageeinheit am Antriebsmotor 2 montiert werden, nämlich durch axiales Aufstecken. Dabei wird zum einen die Schnecke 3 auf die Antriebswelle 5 axial aufgesteckt, während zum anderen das Schneckenlager 19 auf die Ringstufe 41 axial aufgesteckt wird.

Die Schnecke 3 besitzt an ihrer dem Antriebsmotor 2 zugewandten Stirnseite einen axialen Eingriff 43, in den der Mitnehmer 18 eingreift. Ferner besitzt die Welle 3 im Bereich ihres Eingriffs 43 koaxial zur Antriebswellendrehachse 6 eine Einstecköffnung 44, in welche die Antriebswelle 5 koaxial hineinragt. Der quer zur Antriebswellendrehachse 6 von der Antriebswelle 5 abstehende Mitnehmer 18 führt zu einer formschlüssigen Drehmomentübertragung zwischen Antriebswelle 5 und Schnecke 3 innerhalb des Eingriffs 43. Sobald die Antriebswelle 5 in die Stecköffnung 44 hineinragt und/oder der Mitnehmer 18 in den Eingriff 43 hineinragt, kann die Schnecke 3 auch nicht mehr aus der offenen Seite des Schneckenlagers 19 radial herausbewegt werden.

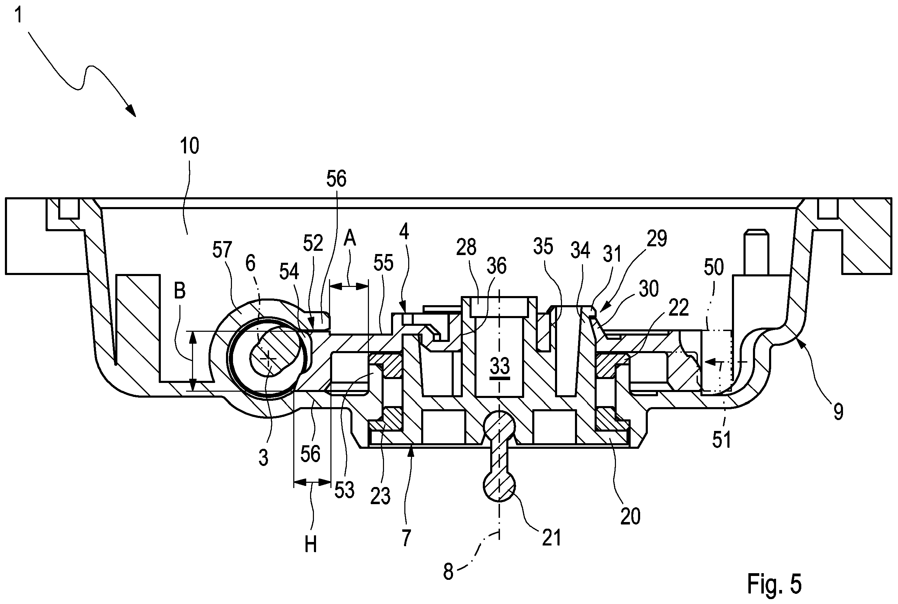

Entsprechend den Fig. 5 und 6 ist zur axialen Lagerung des Schneckenrads 4 ein Axiallager 52 vorgesehen, das die am Schneckenrad 4 auftretenden Axialkräfte aufnimmt und auf das Gehäuse 9 abträgt. Derartige Axialkräfte entstehen insbesondere aufgrund der Kraftübertragung von der Schnecke 3 auf das Schneckenrad 4. Die Axialrichtung ist dabei durch die Richtung der Drehachse 8 des Schneckenrads 4 definiert. Bei der hier gezeigten Ausführungsform weist das Axiallager 52 zwei, sich gegenüberliegende Absätze 56 auf, an denen das Schneckenrad 4 axial beiderseits abgestützt ist. Das Axiallager 52 ist bezüglich der Drehachse 8 des Schneckenrads 4 exzentrisch angeordnet, und zwar im Eingriffsbereich zwischen Schnecke 3 und Schneckenrad 4. Die Schnecke 3 ist koaxial in einer Hülse 57 angeordnet, die auch in Fig. 2 zu sehen ist. Diese Hülse 57 umgreift die Schnecke 3 in Umfangsrichtung und ist zum Schneckenrad 4 hin offen. Das Axiallager 52 ist nun an dieser Hülse 57 ausgebildet, und zwar vorzugsweise integral daran ausgeformt.

Das Axiallager 52 ist vorzugsweise integral am Gehäuse 9, z.B. in Urformtechnik, insbesondere mittels eines einzigen Schiebers, hergestellt.

Anhand Figur 5 ist die vorteilhafte Montage der Antriebsvorrichtung 1 näher erläutert. Zuerst wird der Antriebsmotor 2 mit der Schnecke 3, dem Schneckenlager 19 und Mitnehmer 18 verbunden. Diese Baugruppe wird anschließend in das Gehäuse 9 eingesetzt. Bei einem integral mit dem Gehäuse 9 ausgebildeten Schneckenlager 19 wird der Antriebsmotor 2 direkt in das Gehäuse 9 eingesetzt. Somit ist die Schnecke 3 axial und radial gelagert. Nachfolgend wird das Radiallager 22 in die dafür vorgesehene Gehäuseöffnung eingesetzt. Anschließend wird das Schneckenrad 4 in das Gehäuse 9 eingelegt. Hierbei nimmt das Schneckenrad 4 eine exzentrische Position 50 bezogen auf das Lager 22, die mit einer strich-zwei-punktierten Linie dargestellt ist, ein. Die Höhe H des Zahnkranzes 54 darf maximal so groß sein, wie der Abstand A zwischen den Absätzen 56 des Axiallagers 52 des Schneckenrades 4 und dem Gehäuseabsatz 53 für die Radiallagerung des Schneckenrades 4. Weiterhin ist die Breite B des Zahnkranzes 54 gleich groß, wie die lichte Weite des Axiallagers 52. Durch die asymmetrische Anordnung des Zahnkranzes 54 auf dem Speichenrad 55, welches über Speichen oder über einen geschlossenen Scheibenbereich verfügt, kann das Schneckenrad 4 in dem Gehäuse 9 verschoben werden. Der Zahnkranz 54 des Schneckenrads 4 wird in Pfeilrichtung 51 in Eingriff zu der Schnecke 3 verschoben. Somit befindet sich das Schneckenrad 4 etwa zentrisch über einer Gehäuseöffnung bzw. dem Lager 22. Anschließend wird der Abtrieb 7 mit vormontiertem Radiallager 23 von außen durch die Gehäuseöffnung mit dem Schneckenrad 4 verbunden. Hierbei greift der Mitnehmer 34 in die Mitnehmeröffnung 35. Weiterhin greifen die Clipselemente 30, 31 ineinander und bilden so eine Axialverbindung des Schneckenrades 4 mit dem Abtrieb 7. Durch diese Verbindung ist das Schneckenrad 4 axial und radial in dem Gehäuse 9 fixiert. Im Anschluss daran können die weiteren Elemente montiert werden.

## Patentansprüche

1. Antriebsvorrichtung, insbesondere für Fahrzeuganwendungen, wie z. B. zum Antreiben wenigstens eines Stellglieds einer Drossel oder einer Klappe oder eines Ventils,
- mit einem Antriebsmotor (2), der eine Antriebswelle (5) rotierend antreibt,
- mit einer Schnecke (3), die mit der Antriebswelle (5) antriebsgekoppelt ist,
- mit einem Schneckenrad (4), das mit der Schnecke (3) in Eingriff steht und mit einem Abtrieb (7) antriebsgekoppelt ist, und
- mit einem Gehäuse (9),
- wobei ein Axiallager (52) für das Schneckenrad (4) vorgesehen ist, das die von der Schnecke (3) auf das Schneckenrad (4) übertragenen Axialkräfte aufnimmt,
**dadurch gekennzeichnet,**
**dass** das Axiallager (52) bezüglich der Drehachse (8) des Schneckenrads (4) exzentrisch im Eingriffsbereich zwischen Schnecke (3) und Schneckenrad (4) angeordnet ist.

2. Antriebsvorrichtung nach Anspruch 1,
**dadurch gekennzeichnet,**
**dass** ein Schneckenlager (19) für die Schnecke (3) vorgesehen ist, das als Schneckenaxiallager ausgebildet ist und derart mit dem Antriebsmotor (2) verbunden ist, dass die auftretenden Lagerkräfte von der Antriebswelle (5) entkoppelt sind.

3. Antriebsvorrichtung nach Anspruch 1 oder 2,
**dadurch gekennzeichnet,**
**dass** das Axiallager (52) zwei, sich gegenüberliegende Absätze (56) aufweist, an denen das Schneckenrad (4) axial beiderseits abgestützt ist.

4. Antriebsvorrichtung nach einem der vorhergehenden Ansprüche,
**dadurch gekennzeichnet,**
**dass** das Axiallager (52) an einer die Schnecke (3) in der Umfangsrichtung umgreifenden und zum Schneckenrad (4) hin offenen Hülse (57) ausgebildet ist, insbesondere integral daran ausgeformt ist.

5. Antriebsvorrichtung nach einem der vorangehenden Ansprüche,
**dadurch gekennzeichnet,**
**dass** das Axiallager (52) integral am Gehäuse (9), vorzugsweise in Urformtechnik, insbesondere mittels eines einzigen Schiebers, hergestellt ist.

6. Antriebsvorrichtung nach einem der vorangehenden Ansprüche,
**dadurch gekennzeichnet,**
**dass** das Schneckenlager (19) über ein Schneckenradiallager (45) verfügt, wobei die Schnecke (3) radial zur Antriebswellendrehachse (6) in das Schneckenlager (19) einsetzbar ist und wobei das Schneckenradiallager (45) vorzugsweise c-förmig ausgebildet ist und die Schnecke (3) im Radiallagerbereich vorzugsweise zu 180° oder mehr als 180° umschlossen ist.

7. Antriebsvorrichtung nach einem der vorangehenden Ansprüche,
**dadurch gekennzeichnet,**
**dass** das Schneckenlager (19) zwischen dem Antriebsmotor (2) und dem Gehäuse (9) verspannt ist und/oder integraler Bestandteil des Gehäuses (9) ist.

8. Antriebsvorrichtung nach einem der vorangehenden Ansprüche,
**dadurch gekennzeichnet,**
**dass** der Antriebsmotor (2) spielfrei in das Schneckenlager (19) gepresst ist.

9. Antriebsvorrichtung nach einem der vorangehenden Ansprüche,
**dadurch gekennzeichnet,**
**dass** zwischen dem Schneckenrad (4) und dem Abtrieb (7) eine Antriebskopplung gebildet ist, wobei durch die Antriebskopplung eine Zentrierung des Schneckenrades (4) in dem Gehäuse (9) erfolgt und die Antriebskopplung ein Radiallager für das Schneckenrad (4) bildet.

10. Antriebsvorrichtung nach Anspruch 9,
**dadurch gekennzeichnet,**
**dass** die Antriebskopplung zwischen dem Schneckenrad (4) und dem Abtrieb (7) mittels einer Clipsverbindung (29) erfolgt, die am Schneckenrad (4) angeordnete erste Clipselemente (30) und an dem Abtrieb (7) angeordnete zweite Clipselemente (31) aufweist, die das Schneckenrad (4) axial fest mit dem Abtrieb (7) verbinden, wobei insbesondere vorgesehen sein kann, dass die ersten Clipselemente (30) integral am Schneckenrad (4) ausgeformt sind, und/oder dass die zweiten Clipselemente (31) integral an dem Abtrieb (7) ausgeformt sind.

11. Antriebsvorrichtung nach Anspruch 10,
**dadurch gekennzeichnet,**
**dass** die einen Clipselemente durch radial federnde Rasten (30) gebildet sind, während die anderen Clipselemente durch radiale Rastvertiefungen (31) gebildet sind, in welche die Rasten (30) eingreifen und das Schneckenrad (4) in Axialrichtung formschlüssig an dem Abtrieb (7) sichern.

12. Antriebsvorrichtung nach Anspruch 10 oder 11,
**dadurch gekennzeichnet,**
**dass** die Clipsverbindung (29) an dem Abtrieb (7) oder am Schneckenrad (4) zumindest einen zur Abtriebsdrehachse (8) exzentrisch angeordneten, sich bzgl. der Abtriebsdrehachse (8) axial erstreckenden Mitnehmer (34) sowie am Schneckenrad (4) oder an dem Abtrieb (7) mindestens eine dazu komplementäre Mitnehmeröffnung (35) aufweist, in welche der jeweilige Mitnehmer (34) axial hineinragt und dadurch das Schneckenrad (4) in Drehrichtung formschlüssig an dem Abtrieb (7) sichert.

13. Antriebsvorrichtung nach Anspruch 12,
**dadurch gekennzeichnet,**
- **dass** der jeweilige Mitnehmer (34) an dem Abtrieb (7) oder am Schneckenrad (4) integral ausgeformt ist, und/oder
- **dass** die jeweilige Mitnehmeröffnung (35) am Schneckenrad (4) oder an dem Abtrieb (7) integral ausgeformt ist.

14. Antriebsvorrichtung nach einem der Ansprüche 9 bis 13
**dadurch gekennzeichnet,**
**dass** der Abtrieb (7) ein Abtriebsglied (20) aufweist, das mit dem Schneckenrad (4) antriebsgekoppelt ist.

## Claims

1. Drive device, in particular for vehicle applications, such as for driving at least one actuator of a throttle, a flap, or a valve,
- comprising a drive motor (2) that rotatably drives a drive shaft (5),
- comprising a worm (3) that can be coupled to the drive shaft (5) in a driving manner,
- comprising a worm gear (4) which is engaged with the worm (3) and which is coupled with an output (7) in a driving manner, and
- comprising a housing (9),
- wherein an axial bearing (52) is provided for the worm gear (4), which absorbs the axial forces transferred from the worm (3) to the worm gear (4),
**characterised in that** the axial bearing (52) is arranged eccentrically in the engagement region between worm (3) and worm gear (4) in relation to the axis of rotation (8) of the worm gear (4).

2. Drive device according to claim 1, **characterised in that** a worm bearing (19) is provided for the worm (3), being configured as worm axial bearing and connected with the drive motor (2) in such a way that the bearing forces occurring are decoupled from the drive shaft (5).

3. Drive device according to claim 1 or 2, **characterised in that** the axial bearing (52) has two opposing ledges (56), on which the worm gear (4) is supported axially on both sides.

4. Drive device according to any one of the preceding claims, **characterised in that** the axial bearing (52) is configured on a casing encompassing the worm (3) in the circumferential direction and open to the worm gear (4) (57), in particular is formed integral thereto.

5. Drive device according to any one of the preceding claims, **characterised in that** the axial bearing (52) is manufactured integrally on the housing (9), preferably using the original-form technique, in particular by means of a single slide.

6. Drive device according to any one of the preceding claims, **characterised in that** the worm bearing (19) has a worm radial bearing (45), wherein the worm (3) can be inserted into the worm bearing (19) radially to the axis of rotation of the drive shaft (6) and wherein the worm radial bearing (45) is preferably configured in the shape of a "c" and the worm (3) is enclosed in the radial bearing region preferably over 180° or more than 180°.

7. Drive device according to any one of the preceding claims, **characterised in that** the worm bearing (19) is braced between the drive motor (2) and the housing (9) and/or is an integral component part of the housing (9).

8. Drive device according to any one of the preceding claims, **characterised in that** the drive motor (2) is pressed into the worm bearing (19) without any play.

9. Drive device according to any one of the preceding claims, **characterised in that** a drive coupling is formed between the worm gear (4) and the output (7), wherein there is centring of the worm gear (4) in the housing (9) by the drive coupling and the drive coupling forms a radial bearing for the worm gear (4).

10. Drive device according to claim 9, **characterised in that** the drive coupling between the worm gear (4) and the output (7) comes about by means of a clip connection (29), having first clip elements (30) arranged on the worm gear (4) and second clip elements (31) arranged on the output (7), which connect the worm gear (4) axially firmly with the output (7), wherein in particular it can be provided that the first clip elements (30) are configured integrally on the worm gear (4) and/or that the second clip elements (31) are configured integrally on the output (7).

11. Drive device according to claim 10, **characterised in that** some clip elements are formed by radially sprung stops (30), whereas the other clip elements are formed by radial stop depressions (31), into which the stops (30) engage and secure the worm gear (4) to the output (7) in a form-fitting manner in axial direction.

12. Drive device according to claim 10 or 11, **characterised in that** the clip connection (29) has on the output (7) or on the worm gear (4) at least one cam (34) arranged eccentrically to the output axis (8) and extending axially in relation to the output axis of rotation (8) and also at least one complementary cam opening (35) on the worm gear (4) or on the output (7), into which the particular cam (34) protrudes axially and thereby secures the worm gear (4) to the output (7) in a form-fitting manner in the direction of rotation.

13. Drive device according to claim 12, **characterised in that**
- the particular cam (34) is configured integrally on the output (7) or on the worm gear (4) and/or
- the particular cam opening (35) is configured integrally on the worm gear (4) or on the output (7).

14. Drive device according to any one of claims 9 to 13 **characterised in that** the output (7) has an output member (20), which is drive-coupled with the worm gear (4).

## Revendications

1. Dispositif d'entraînement, en particulier pour des applications en construction automobile, par exemple afin d'entraîner au moins un organe de réglage d'une soupape d'étranglement ou d'un clapet ou d'une vanne,
- avec un moteur d'entraînement (2), qui entraîne un arbre moteur (5) en rotation,
- avec une vis sans fin (3), qui est couplée pour l'entraînement à l'arbre moteur (5),
- avec une roue à denture hélicoïdale (4), qui est en prise avec la vis sans fin (3) et qui est couplée pour l'entraînement à une sortie (7), et
- avec un carter (9),
- dans lequel un palier de butée (52) est prévu pour la roue à denture hélicoïdale (4), lequel palier de butée reçoit les forces axiales transmises par la vis sans fin (3) à la roue à denture hélicoïdale (4),
**caractérisé en ce que** le palier de butée (52) est disposé de manière excentrique par rapport à l'axe de rotation (8) de la roue à denture hélicoïdale (4) dans la zone d'engrènement entre la vis sans fin (3) et la roue à denture hélicoïdale (4).

2. Dispositif d'entraînement selon la revendication 1, **caractérisé en ce qu'**un palier de vis sans fin (19) est prévu pour la vis sans fin (3), lequel palier de vis sans fin est réalisé comme un palier de butée de vis sans fin et est relié de telle manière au moteur d'entraînement (2) que les forces de palier qui apparaissent sont découplées de l'arbre moteur (5).

3. Dispositif d'entraînement selon la revendication 1 ou 2, **caractérisé en ce que** le palier de butée (52) comporte deux décrochements (56) qui se font face et contre lesquels la roue à denture hélicoïdale (4) s'appuie de façon axiale des deux côtés.

4. Dispositif d'entraînement selon l'une quelconque des revendications précédentes, **caractérisé en ce que** le palier de butée (52) est réalisé au niveau d'un manchon (57) entourant en direction circonférentielle la vis sans fin (3) et ouvert en direction de la roue à denture hélicoïdale (4), en particulier est formé de manière intégrée à celui-ci.

5. Dispositif d'entraînement selon l'une quelconque des revendications précédentes, **caractérisé en ce que** le palier de butée (52) est fabriqué de manière intégrée au carter (9), de préférence avec une technique de formage primaire, en particulier au moyen d'une seule coulisse.

6. Dispositif d'entraînement selon l'une quelconque des revendications précédentes, **caractérisé en ce que** le palier de vis sans fin (19) dispose d'un palier radial de vis sans fin (45), dans lequel la vis sans fin (3) peut être placée dans le palier de vis sans fin (19) de manière radiale par rapport à l'axe de rotation d'arbre moteur (6) et dans lequel le palier radial de vis sans fin (45) est réalisé de préférence en forme de c et la vis sans fin (3) est entourée dans la zone de palier radial de préférence jusqu'à 180° ou jusqu'à plus de 180°.

7. Dispositif d'entraînement selon l'une quelconque des revendications précédentes, **caractérisé en ce que** le palier de vis sans fin (19) est serré entre le moteur d'entraînement (2) et le carter (9) et/ou fait partie intégrante du carter (9).

8. Dispositif d'entraînement selon l'une quelconque des revendications précédentes, **caractérisé en ce que** le moteur d'entraînement (2) est pressé sans jeu dans le palier de vis sans fin (19).

9. Dispositif d'entraînement selon l'une quelconque des revendications précédentes, **caractérisé en ce qu'**un couplage d'entraînement est formé entre la roue à denture hélicoïdale (4) et la sortie (7), dans lequel un centrage de la roue à denture hélicoïdale (4) dans le carter (9) s'effectue via le couplage d'entraînement et le couplage d'entraînement forme un palier radial pour la roue à denture hélicoïdale (4).

10. Dispositif d'entraînement selon la revendication 9, **caractérisé en ce que** le couplage d'entraînement entre la roue à denture hélicoïdale (4) et la sortie (7) s'effectue au moyen d'un assemblage clipsé (29) qui comporte des premiers éléments à encliqueter (30) agencés au niveau de la roue à denture hélicoïdale (4) et des deuxièmes éléments à encliqueter (31) agencés au niveau de la sortie (7), lesquels éléments à encliqueter assemblent de façon axiale de manière fixe la roue à denture hélicoïdale (4) et la sortie (7), dans lequel il peut en particulier être prévu que les premiers éléments à encliqueter (30) sont formés de manière intégrée à la roue à denture hélicoïdale (4) et/ou que les deuxièmes éléments à encliqueter (31) sont formés de manière intégrée à la sortie (7).

11. Dispositif d'entraînement selon la revendication 10, **caractérisé en ce que** des éléments à encliqueter sont formés par des crans (30) faisant de façon radiale ressort tandis que les autres éléments à encliqueter sont formés par des creux d'encliquetage radiaux (31) dans lesquels les crans (30) pénètrent et fixent la roue à denture hélicoïdale (4) en direction axiale par concordance de forme sur la sortie (7).

12. Dispositif d'entraînement selon la revendication 10 ou 11, **caractérisé en ce que** l'assemblage clipsé (29) comporte au niveau de la sortie (7) ou de la roue à denture radiale (4) au moins un entraîneur (34) qui est agencé de manière excentrique par rapport à l'axe de rotation de sortie (8) et qui s'étend de façon axiale par rapport à l'axe de rotation de sortie (8) ainsi qu'au niveau de la roue à denture hélicoïdale (4) ou de la sortie (7) au moins une ouverture d'entraîneur (35) complémentaire dans laquelle l'entraîneur (34) respectif pénètre de façon axiale et fixe ainsi la roue à denture hélicoïdale (4) dans la direction de rotation par concordance de forme sur la sortie (7).

13. Dispositif d'entraînement selon la revendication 12, **caractérisé en ce que**
- l'entraîneur (34) respectif est formé de manière intégrée à la sortie (7) ou à la roue à denture hélicoïdale (4), et/ou
- l'ouverture d'entraîneur (35) respective est formée de manière intégrée à la roue à denture hélicoïdale (4) ou à la sortie (7).

14. Dispositif d'entraînement selon l'une quelconque des revendications 9 à 13, **caractérisé en ce que** la sortie (7) comporte un organe de sortie (20) qui est couplé pour l'entraînement à la roue à denture hélicoïdale (4).
